Europäisches Patentamt

European Patent Office

Office européen des brevets

(19)

(11) Veröffentlichungsnummer: **0 226 969 B1**

# EUROPÄISCHE PATENTSCHRIFT

(45) Veröffentlichungstag der Patentschrift: **15.05.91**

(51) Int. Cl.⁵: **B01F 3/04**

(21) Anmeldenummer: **86117282.3**

(22) Anmeldetag: **11.12.86**

(54) **Vorrichtung zum Herstellen eines Reaktionsgemisches aus mindestens zwei Kunststoffkomponenten.**

(30) Priorität: **19.12.85 DE 3544914**

(43) Veröffentlichungstag der Anmeldung:
**01.07.87 Patentblatt 87/27**

(45) Bekanntmachung des Hinweises auf die
Patenterteilung:
**15.05.91 Patentblatt 91/20**

(84) Benannte Vertragsstaaten:
**DE FR GB IT**

(56) Entgegenhaltungen:
**EP-A- 0 110 244**
**DE-A- 3 416 442**
**FR-A- 2 224 280**
**FR-A- 2 530 970**

(73) Patentinhaber: **ELASTOGRAN POLYURETHANE GMBH**
**Landwehrweg**
**W-2844 Lemförde(DE)**

(72) Erfinder: **Schoenauer, Peter**
**Parsbergerstrasse 28**
**W-8000 München(DE)**
Erfinder: **Taubenmann, Peter**
**Strindbergstrasse 1**
**W-8000 München 60(DE)**

(74) Vertreter: **Welzel, Gunther, Dr. et al**
**c/o BASF Aktiengesellschaft Carl-Bosch-Strasse 38**
**W-6700 Ludwigshafen(DE)**

**Beschreibung**

Die Erfindung betrifft eine Vorrichtung nach dem Oberbegriff des Patentanspruchs 1.

Eine derartige Vorrichtung ist aus der DE-OS 34 16 442 bekannt. Bei dem in dieser Offenlegungsschrift beschriebenen Verfahren und der entsprechenden Vorrichtung ist in der Ringleitung bzw. in dem Bypass ein Meßgerät vorgesehen, das den Gasgehalt in der entsprechenden Kunststoffkomponente feststellt und so die Gasbeladung selbst regelt.

Es hat sich nun herausgestellt, daß bei einigen Anwendungsfällen diese Art der Messung noch nicht zufriedenstellend ist. Das Meßgerät reagiert nämlich nicht nur auf die Gasbeladung sondern auch auf andere Zuschlagstoffe in der Kunststoffkomponente, wie z.B. Wasser, Glasfasern und andere Zusätze. Durch diese Zuschlagstoffe wird die Messung verfälscht.

Der Erfindung liegt daher die Aufgabe zugrunde, eine Vorrichtung nach dem Oberbegriff des Anspruches 1 zu schaffen, bei der die Messung der Gasbeladung exakter erfolgt und insbesondere möglichst unabhängig von weiteren Zuschlagstoffen in der entsprechenden Kunststoffkomponente ist.

Diese Aufgabe wird durch das Kennzeichen des Anspruches 1 gelöst.

Erfindungsgemäß ist also ein zweites Meßgerät vorhanden, das dem ersten parallel geschaltet ist, das aber unter höherem Druck arbeitet. Das erste Meßgerät arbeitet normalerweise bei Tankdruck, wohingegen der Druck, unter dem das zweite parallel geschaltete Meßgerät arbeitet, so hoch liegt, daß die aufgenommenen Gase praktisch vollständig komprimiert, d.h. in Lösung gegangen sind, so daß sie von diesem zweiten Meßgerät nicht mehr registriert werden. Erfaßt werden lediglich die Zuschlagstoffe. Werden die Meßwerte der beiden Meßgeräte bzw. die entsprechenden Meßsignale in einer Einrichtung, beispielsweise einem Rechner oder einer Komperatorschaltung, miteinander verglichen, so ist es dann ohne weiteres möglich, die wirkliche Gasbeladung exakt zu berechnen, so daß Fehler, bedingt durch mehr oder weniger hohe Anteile an Zuschlagstoffen, vermieden werden.

Als besonders zweckmäßig haben sich als Meßgeräte sog. kapazitive Meßsonden herausgestellt, welche an sich bekannt und handelsüblich sind. Geeignet sind beispielsweise solche Meßsonden, wie sie für die kotinuierliche Füllstandsmessung Verwendung finden. Diese bestehen im wesentlichen aus einem Elektrodenkopf, in dem auch der Elektronikeinsatz eingebaut ist und den eigentlichen Elektroden als Meßteil, die z.B. in Form eines Rohres mit zentralem Stab ausgebildet sein können. Die kapazitive Messung beruht dabei auf der Bestimmung der Dielektrizitätskonstanten der Kunststoffkomponenten, die sich durch Zuschlagstoffe, wie Glasfasern, Wasser oder dispergierte Gasblasen verändert. Andere Meßgeräte, die nach anderen physikalischen Prinzipien arbeiten, z.B. Dichtemeßgeräte, sind ebenfalls einsetzbar.

Nach einem weiteren Merkmal der Erfindung ist der in der Einrichtung errechnete Wert für die Gasbeladung der Komponente einem Regelgerät zuführbar, welches in Abhängigkeit von einem einstellbaren Sollwert ein Stellglied für ein die Gaszufuhr regelndes Ventil betätigt. Auf diese Weise läßt sich der Gasgehalt einer Komponente mit hoher Genauigkeit und ohne manuellen Eingriff einstellen.

Im folgenden wird die erfindungsgemäße Vorrichtung unter Hinweis auf die Zeichnungen näher erläutert.

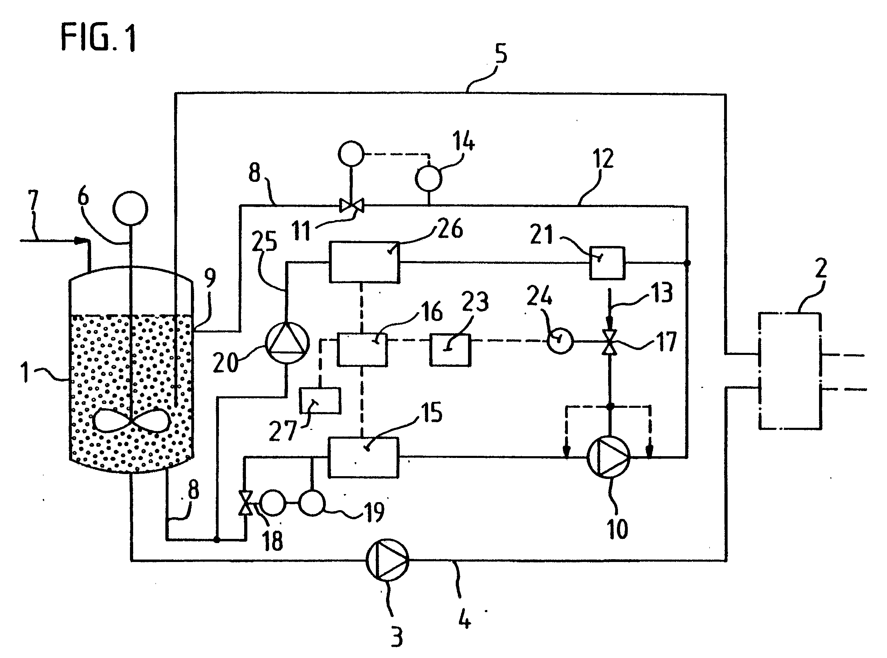

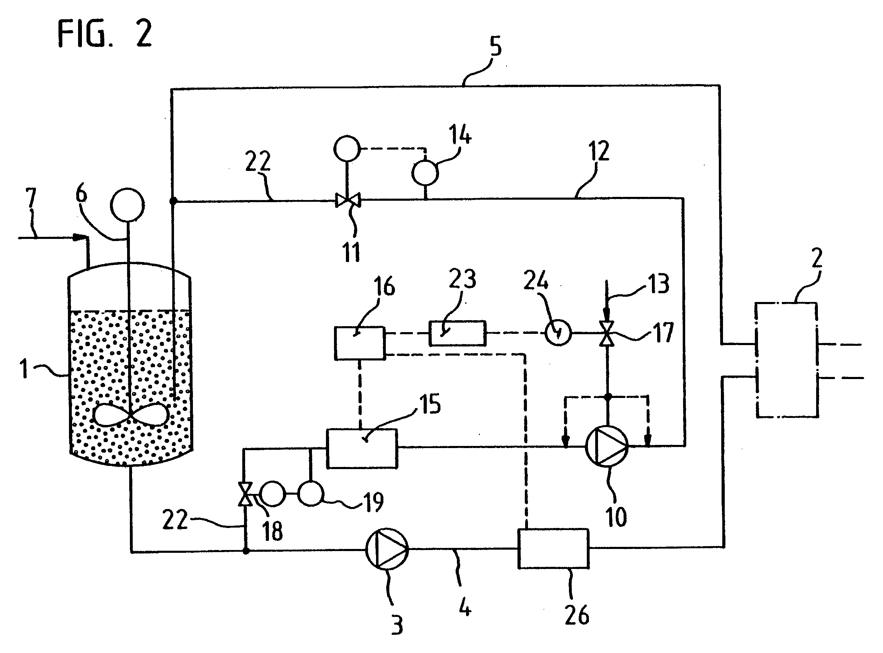

In den Figuren 1 und 2 ist schematisch eine Hochdruckmischvorrichtung mit einem Vorratsbehälter (1) für eine Komponente und einem Mischkopf (2) dargestellt. Vorratsbehälter und Mischkopf sind über eine eine Dosierpumpe (3) enthaltende Zuführleitung (4) sowie eine Rückführleitung (5) miteinander verbunden. Im Vorratsbehälter ist ein Rührer (6) angedeutet. Mit (7) ist eine Gaszuleitung bezeichnet, über welche ein bestimmter Behälterdruck aufrechterhalten wird. Der Vorratsbehälter sowie das Leitungssystem für die andere Komponente sind zur Vereinfachung der zeichnerischen Darstellung nicht gezeigt.

An den Vorratsbehälter (1) ist eine in einem getrennten Kreislauf geführte Ringleitung (8) angeschlossen, die bei (9) wieder in den Vorratsbehälter mündet (Figur 1). In der Ringleitung sind eine Förderpumpe (10) und ein Drosselorgan (11) vorgesehen. Der Abschnitt (12) der Ringleitung zwischen Förderpumpe und Drosselorgan ist als Kompressionszone ausgebildet.

Die mit Gas zu beladene Komponente wird vor ihrer Vermischung mit der anderen Komponente durch die Förderpumpe (10) im Kreislauf umgewälzt. Dabei erfolgt die Zufuhr des Gases über die Gaszuleitung (13) in den Saugbereich und/oder Druckbereich der Förderpumpe, gegebenenfalls auch direkt in die Förderpumpe. Durch die Förderpumpe sowie das Drosselorgan (11) wird der in der Kompressionszone (12) für eine wirkungsvolle Absorption des Gases erforderliche Druck eingestellt und mittels eines Meßwertgebers (14) gemessen. Der Meßwert kann direkt angezeigt und zur Einstellung des Drosselorgans von Hand verwendet werden. Es ist ebenso möglich, den Meßwert zur automatischen Regelung des Drosselorgans über eine Verstelleinrichtung zu verwenden.

Durch den von der Dosierpumpe (3) unabhängigen Komponentenkreislauf wird eine kontinuierliche Konditionierung der Komponente im Vorratsbehälter (1) auf einen vorgegebenen Gasgehalt, unabhängig vom Betriebszustand der übrigen Mischvorrichtung, möglich. Insbesondere bei Produktionsanlagen mit hohen Ausstoßleistungen und kurzen Pausenzeiten, in denen keine Vermischung mit der anderen Komponente stattfindet, ergeben sich zusätzliche Vorteile, indem z.B. sonst zwangsläufig erforderliche Unterbrechungen zur Gasbeladung einer oder beider Komponenten vermieden werden.

Zur Bestimmung des Gasgehalts der Komponente ist in der Ringleitung (8) vor der Förderpumpe (10) ein entsprechendes Meßgerät (15) angebracht. Das Meßgerät ist mit einer Einrichtung (16) gekoppelt, die auf ein Regelgerät (23) wirkt.

Für eine Steigerung der Meßgenauigkeit der Gasbeladung ist vor dem Meßgerät (15) ein Drosselventil (18) vorgesehen, über welches der Komponentendruck auf einen Wert unterhalb des Behälterdruckes abgesenkt werden kann. Dieser Wert wird über den Sollwertgeber (19) bestimmt. Auf diese Weise sind neben dem in der Komponente dispergiert vorliegenden Gasanteil auch der in der Komponente gelöste Gasanteil teilweise oder vollständig erfaßbar.

Weiterhin wird der Grad der Gasbeladung einer oder beider Komponenten in einem von der Ringleitung (8) ab- und auf sie wieder zugeführten Bypass (25) bestimmt. Hierfür enthält der Bypass (25) ein zweites unter hohem Druck arbeitendes Meßgerät (26), welches zu dem ersten Meßgerät (15) parallel geschaltet ist. Für die erforderliche Druckerhöhung der Kunststoffkomponente sind in dem Bypass eine Pumpe (20) sowie ein Vorspannventil (21) vorgesehen. Die durch das Meßgerät (26) festgestellten Werte werden ebenfalls auf die Einrichtung (16) geführt, mit den Meßwerten des ersten Meßgerätes (15) verglichen und daraus der Wert der Gasbeladung errechnet und bei (27) angezeigt. An die Einrichtung (16) ist das Regelgerät (23) angeschlossen, in dem der Wert der Gasbeladung mit einem vorgegebenen Sollwert verglichen wird. Bei Abweichungen aus diesem Vergleich wird das Stellglied (24) für ein Ventil (17) durch das Regelgerät betätigt.

Gemäß Figur 2 erfolgt die Gasbeladung einer oder beider Kunststoffkomponenten in einem Bypass (22) zwischen der Zuführleitung (4) und der Rückführleitung (5). Zur Bestimmung des Gasgehalts ist ein erstes Meßgerät (15) vorgesehen, welches mit der Einrichtung (16) verbunden ist. Der Ausgang der Einrichtung (16) ist auf das Regelgerät (23) geschaltet. Der Bypass enthält weiter ein Drosselventil (18), einen Sollwertgeber (19), eine Förderpumpe (10) mit einer Gaszuleitung (13), einem Ventil (17) und einem Stellglied (24) sowie ein Drosselorgan (11) und einen Meßwertgeber (14). Das zweite unter hohem Druck arbeitende Meßgerät (26) ist stromab von der Dosierpumpe (3) in der Zuführleitung (4) angebracht. Die für eine genauere Bestimmung der Gasbeladung durch das zweite Meßgerät erforderliche Druckerhöhung der Kunststoffkomponente wird mit Hilfe der Dosierpumpe (3) und mit im Mischkopf (2) vorhandenen Düsen erreicht.

Die beiden Meßgeräte (15) und (26) liefern entsprechende Signale, die in einem an die Einrichtung (16) angeschlossenen Regelgerät (23) verglichen werden, um die tatsächliche Gasbeladung unabhängig von dem Anteil an weiteren Zuschlagstoffen in der Kunststoffkomponente zu berechnen. Der weitere Aufbau dieser Vorrichtung entspricht der in Figur 1 gezeigten und vorstehend beschriebenen Ausführungsform.

Nach der Erfindung läßt sich der tatsächliche Gasgehalt einer Kunststoffkomponente mit hoher Genauigkeit ermitteln bzw. durch eine entsprechende Regelung äußerst exakt festlegen.

## Ansprüche

1. Vorrichtung zum Herstellen eines Reaktionsgemisches aus mindestens zwei Kunststoffkomponenten, insbesondere auf der Basis Polyurethan, mit je einem Vorratsbehälter (1) für jede Kunststoffkomponente und einem Mischkopf (2), der über Dosierpumpen (3) enthaltende Zuführleitungen (4) und Rückführleitungen (5) mit den Vorratsbehältern verbunden ist, sowie mindestens einer Gaszuleitung (13) in das Leistungssystem wenigstens einer Komponente, die in eine an den Vorratsbehälter angeschlossene und mit einer Förderpumpe (10) versehene Ringleitung (8) bzw. einen Bypass (22) zwischen Zuführ- und Rückführleitung einmündet, wobei in der Ringleitung bzw. in dem Bypass vor der Förderpumpe (10) ein erstes Meßgerät (15) zur Bestimmung des Gasgehaltes der Komponente vorgesehen ist, dadurch gekennzeichnet, daß dem ersten Meßgerät (15) ein zweites unter hohem Druck arbeitendes Meßgerät (26) parallel geschaltet ist, und daß eine Einrichtung (16) vorgesehen ist, die die Meßwerte der beiden Meßgeräte (15, 26) vergleicht, daraus die Gasbeladung errechnet und die Gaszufuhr regelt.

2. Vorrichtung nach Anspruch 1, dadurch gekennzeichnet, daß es sich bei den Meßgeräten um kapazitive Meßsonden handelt.

3. Vorrichtung nach Anspruch 1, dadurch gekennzeichnet, daß der in der Einrichtung (16) errechnete Wert für die Gasbeladung der Komponente einem Regelgerät (23) zuführbar ist, welches in Abhängigkeit von einem einstellbaren Sollwert ein Stellglied (24) für ein die Gaszufuhr regelndes Ventil (17) betätigt.

## Claims

1. Apparatus for producing a reaction mixture of two or more plastics components, in particular those based on polyurethane, comprising a stock tank (1) for each plastics component and a mixing head (2) which is connected to the stock tanks via feed lines (4) containing metering pumps (3) and return lines (5), as well as one or more gas feed lines (13) into the pipeline system of one or more components, which feed line ends in a ring line (8) provided with a feed pump (10) and connected to the stock tanks, or in a bypass (22) between the feed line and the return line, a first meter (15) for determining the gas content of the component being provided in the ring line or in the bypass upstream of the feed pump (10), wherein a second meter (26) operating under high pressure is connected in parallel with the first meter (15), and a unit (16) which compares the measured values from the two meters (15, 26), calculates the gas content from this and controls the gas supply is provided.

2. Apparatus as claimed in claim 1, wherein the meters are capacitive measuring probes.

3. Apparatus as claimed in claim 1, wherein the gas content of the component which is calculated in the unit (16) can be fed to a controller (23) which, as a function of a settable setpoint value, actuates a final control element (24) for a valve (17) which regulates the gas feed.

## Revendications

1. Dispositif de préparation d'un mélange de réaction d'au moins deux composants de matière plastique, en particulier à base de polyuréthane, comportant un réservoir de stockage (1) pour chaque composant de matière plastique et une tête de mélange (2) qui est reliée aux réservoirs de stockage par des conduits d'amenée (4) et de retour (5) contenant des groupes de dosage (3) ainsi qu'au moins un canal d'amenée de gaz (13) dans le système de canalisation d'au moins un composant, qui débouche entre conduite d'amenée et conduite de retour, dans une conduite circulaire (8) ou un bypass (22), raccordés au réservoir de stockage et munis d'une pompe de circulation (10), un premier appareil de mesure (15), pour la détermination de la teneur en gaz du composant, étant prévu dans la conduite circulaire ou dans le bypass en amont de la pompe de circulation (10), caractérisé par le fait qu'avec le premier appareil de mesure (25) est monté en parallèle un deuxième appareil de mesure (26) opérant sous haute pression et qu'il est prévu un moyen (16) qui compare les valeurs de mesure des deux appareils de mesure (15, 26), en déduit par le calcul la charge de gaz et règle l'amenée du gaz.

2. Dispositif selon la revendication 1, caractérisé par le fait qu'il s'agit pour les appareils de mesure de sondes de mesures capacitives.

3. Dispositif selon la revendication 1, caractérisé par le fait que la valeur, calculée dans le moyen (16), de la charge de gaz du composant, est transmissible à un appareil de réglage (23) qui, en fonction d'une valeur de consigne réglable, actionne un organe de réglage (24) d'une valve (17) réglant l'amenée de gaz.

FIG.1

# FIG. 2

EP 0 226 969 B1